# EUROPEAN PATENT SPECIFICATION

(11) **EP 1 334 292 B1**
(45) Date of publication and mention of the grant of the patent: **11.01.2006**
(21) Application number: 01983682.4
(22) Date of filing: 15.11.2001
(51) Int. Cl.: F16H 25/18, B26D 5/16

(54) **PUNCHING DEVICE COMPRISING A TRANSFER MECHANISM**
STANZVORRICHTUNG MIT EINEM ÜBERTRAGUNGSMECHANISMUS
DISPOSITIF DE DECOUPAGE AVEC MECANISMES DE TRANSFERT

(30) Priority: 15.11.2000 GB 0027815
(43) Date of publication of application: 13.08.2003
(73) Proprietor: Acco UK Limited, Aylesbury, Buckinghamshire HP19 3DT (GB)
(72) Inventor: MEAD, David, Malvern Worcestershire WR14 3NT (GB); BUMPSTEED, Austin, Blackpole Worcestershire WR4 9XB (GB); SMITH, Ian, Droitwich Worcestershire WR9 7SH (GB)
(74) Representative: Wardley, Diana Mary
(86) International application number: PCT/GB2001/005037
(87) International publication number: WO 2002/040894

(56) References cited:
- DE-A- 4 114 486
- DE-C- 256 642
- US-A- 3 143 912
- PATENT ABSTRACTS OF JAPAN vol. 1999, no. 02, 26 February 1999 (1999-02-26) -& JP 10 309694 A (HITACHI METALS LTD;HMY LTD), 24 November 1998 (1998-11-24)

## Description

### Description of Invention

This invention is concerned with a punching device comprising a transfer mechanism which transmit drive from a drive means to an actuating member, for example, devices for punching a plurality of holes in a stack of sheets, such as of paper.

An example of a conventional transfer mechanism in such devices is a rack and pinion mechanism which includes a plurality of pinions, rotatable by a motor or other drive means, to move the actuating member between selected positions.

A problem encountered with conventional transfer mechanisms is that the drive means may, particularly if a powerful motor is used, overrun, causing the actuating member to move beyond the position at which it should have stopped. The amount of overrun depends, among other factors, on the mass of the actuating member, the force generated by the drive means, and the resistance encountered by the actuating member in operation. Thus it is difficult to predict the amount that the actuating means will move and hence it is necessary either to employ position sensing means to determine the position of the actuating means at the end of its travel or to use a type of drive means, for example a stepper motor, which can be moved by a precise measured amount. Stepper motors, however, are relatively expensive and are unable to handle large, unpredictable loads.

A further problem with conventional transfer mechanisms is that the amount of overrun of the actuating member must be accommodated in the design of its housing, causing the device to bulkier than would otherwise be necessary.

A specific example of the problems that can arise in practise will now be described with reference to a conventional punching device, but it will be appreciated that similar problems arise with other mechanical devices.

A conventional punching device for punching a plurality of holes in a stack of sheets such as of paper, comprises a housing defining an opening or slot into which one or more sheets of paper or the like material (hereinafter referred to as paper, for convenience) may be located preparatory to the performance of a punching operation, said opening or slot hereinafter being referred to as the punching slot. The slot is conventionally bounded by a guide plate and a base plate or die, each being provided with a plurality of aligned apertures. Mounted on the housing is a punch assembly comprising a plurality of punches guided for rectilinear movement between retracted and advanced positions. Drive means is provided, conveniently an electric motor, which is operative through the intermediary of a transfer mechanism, to move the punch assembly from its retracted to its advanced position, causing the punches to pass through the apertures in the guide plate, across the punching slot and through the sheets of paper therein, and into the apertures in the base plate. Such a device is hereinafter referred to as being of the kind specified.

The punches may form part of a punch plate which is mounted for rectilinear sliding movement, and a conventional transfer mechanism comprises a rack and pinion device, including a plurality of pinions, rotatable by the motor, the rack formation being provided on the punch plate, whereby rotation of the pinions moves the punch plate between said retracted and advanced positions.

A problem encountered with conventional punching devices of the kind specified is the force required to cause the punch members to pass through a stack of sheets located in the punching slot, particularly when it is desired to punch the maximum number of holes, conventionally twenty-one. Additionally, there is an increasing tendency for such devices to be utilised to maximum capacity, and for this reason, it has been standard practice as of late to utilise relatively powerful motors. This causes problems, as follows:
a) It is necessary during operation of a punching device of the kind specified to terminate movement of the punch assembly when the punches have completed their punching operation. When the punches have completed passage through the stack of paper in the punching slot, resistence to movement suddenly decreases. Conventionally, sensing means is utilised to sense the arrival of the punch assembly in its advanced position, which may involve the direct positional sensing of the punch assembly, or the positional sensing of another element associated with movement of the punch assembly, and the sensing means operates to terminate operation of the drive motor. However, difficulty is caused by motor over-run, causing the punch assembly to move beyond its advanced position. This problem is, as will be appreciated, exacerbated by the reduction in resistence at the point at which the punches complete movement through the stack of sheets; and
b) It is also required to terminate movement of the punch assembly when only a few sheets are presented for punching, and only a small resistence to movement of the punch assembly is encountered.

US 3143912 discloses a punch actuating mechanism in a punch mechanism, wherein a punch element is moveable into a dye. The punch actuating mechanism comprises a rotating cam, which has a rise/fall cam face thereon, which is opposite to and spaced endwise clear of the punch element. The rotating cam also has an interposer guide surface, which rotates with the cam and is laterally adjacent to the rise/fall cam face. The punch actuating mechanism further comprises an interposer, which is moveable from the cam interposer guide surface onto the cam rise/fall face, to a position between the punch element and the rise/fall cam face. The interposer is of a height radially of the cam, that on the high point of the rise/fall cam face, the interposer moves the punch element into the dye.

DE 4114486 discloses a perforator suitable for a number of different applications, in which the driving power of a driving motor can be transmitted via a lever drive to perforating punches, in accordance with cutting forces required for the perforating punches during the perforating operation. The lever drive comprises a pivot piece, which is pivotally supported on a housing, and which is pivotably connected to all of the perforating punches. A single actuating lever is firmly and rigidly connected to the pivot piece. A driving disc, comprising a curved, closed guiding track is provided, for moving a guiding piece connected to the actuating lever. As a result of pivotally connecting all the perforating punches to a pivot piece, there is obtained one single lever drive for all the punches. The design of the driving disc with a curved, closed guiding track for moving a guiding piece connected to the actuating lever, permits the driving power of the driving motor to be transmitted to the perforating punches in a specific way. At the point and time of perforation, optimal driving forces act on the individual perforating punches. By moving the guiding piece along the closed guiding track, guiding conditions are achieved both during the forward stroke and during the return stroke, so that there is no need for providing a return spring. There is thus no need either for overcoming the spring force of a return spring during the forward stroke.

According to the invention there is provided a punching device comprising a drive means, operative in both a forward and a reverse direction, and a punch assembly, mounted for rectilinear movement between retracted and advanced positions, the drive means and punch assembly being arranged such that operation of the drive means in the forward direction moves the punch assembly towards the retracted position, and operation of the drive means in the reverse direction moves the punch assembly towards the advanced position, and wherein the punching device further comprises a punch overrun compensator, which includes a transfer mechanism connected between the drive means and the punch assembly, and which, in use, provides transmission of drive from the drive means to the punch assembly to move the punch assembly towards the retracted position or the advanced position, and causes no further movement of the punch assembly on reaching one of said positions in the event of overrun of the drive means.

The transfer mechanism may comprise two transfer members, a first member and a second member, in which the first member acts against the second member to move the punch assembly towards the retracted position or the advanced position.

Preferably, the second transfer member comprises at least two faces, and the first transfer member acts against the faces during operation of the drive means.

Conveniently, the construction and arrangement is such that when the first transfer member acts against one of the faces, movement of the punch assembly is produced, and when the first transfer member acts against the second of the faces no such movement is produced.

Preferably, the second transfer member comprises four faces, two of which, being active, act to produce movement of the punch assembly and two of which, being passive, do not produce such movement.

The first transfer member may be a driving member operative against the second transfer member to produce movement thereof or maybe a driven member, which is moved when engaged by the second transfer member. Thus, the second transfer member may be provided by the punch assembly, or part thereof.

Alternatively, the transfer mechanism make comprise a transfer member comprising three faces which may be engaged directly or indirectly with a further transfer member, engagement by said further transfer member with a first face being operative to cause movement of the punch assembly in a first direction, engagement thereby with a second face being operative to cause movement of the punch assembly in a second direction, and traverse thereby of a third face being inoperative to cause movement of the punch assembly.

According to this invention there is also provided a transfer means operative to transmit drive from a drive means to a punch assembly, said transfer means comprising a first transfer member forming part of or which is connected to said drive means, and a second transfer member which forms part of or is connected to said punch assembly, characterised in that one of the said transfer members comprises a first face which on traverse thereby of the other member produces movement of the punch assembly, and a second face which on traverse thereby of the other member does not produce movement of the punch assembly.

Preferably the transfer member comprises a third face, which on traverse thereby of the other member does not produce movement of the punch assembly.

Preferably the drive means is operative to produce movement of the transfer member along a predetermined path, such movement causing the said transfer member to traverse said faces. Conveniently the movement of the drive member is rotary movement, and preferably the third face extends when the punch assembly is in one terminal position, circumferentially of the axis of rotation of the said transfer member.

Thus, preferably operation of the drive means terminates at or shortly subsequent to the punch assembly moving into its advanced position, but the drive means is inoperative to effect movement of the punch assembly beyond its advanced position.

It will be appreciated that whilst the advanced position may conveniently be the position of the punch assembly on completion of movement thereof into punch apertures of a die plate, it may if desired be a defined position a short distance beyond said position.

Additionally, retractive movement of the punch assembly from its advanced position towards its retracted position is effected against the force needed to withdraw punches of the punching assembly from apertures which have been punched in sheets of material, and on completion of such withdrawal, further retractive movement is undesired. Similarly, however, difficulty is encountered in minimising such movement of the punch assembly beyond its retracted position, caused by the drive means over-run, and indeed it is preferable that retractive movement of the punch assembly terminates with some at least of the punches themselves within apertures of a guide plate.

Thus, conveniently, the retracted position is defined as the position in which some at least of the punches have not been withdrawn beyond the apertures of the guide plate.

There will now be given detailed descriptions, to be read with reference to the accompanying drawings, of two punching devices which are preferred embodiments of this invention, having been selected for the purposes of illustrating the invention by way of example.

In the accompanying drawings:
FIGURES 1 to 5 show various stages in the operation of the punch assembly of the punching device which is the first embodiment of this invention; Figure 5a shows an alternative arrangement which may be utilised in the first embodiment; and

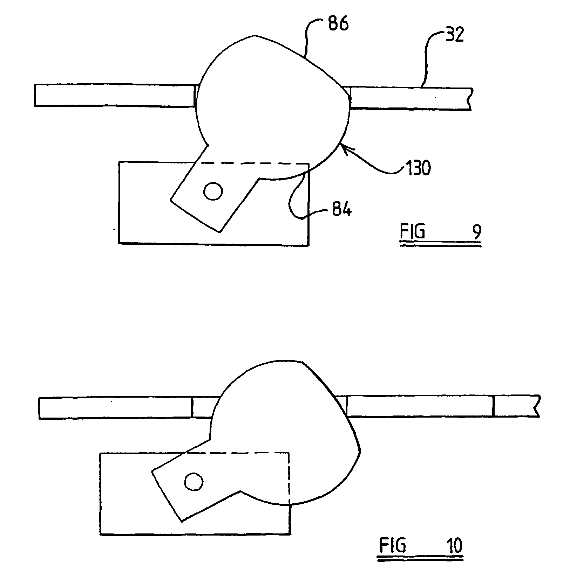

FIGURES 6 to 10 show various stages in the operation of the punch assembly of the punching device which is the second embodiment of this invention.

The device which is the first embodiment of this invention comprises a punch assembly 30 comprising a punch plate 32 mounted for rectilinear movement, comprising a plurality of individual punches 42.

The punch assembly also comprises a base- or die-plate 44, provided with a plurality of punching apertures 46, and, spaced a short distance from the die plate 44, a stripper-plate 48 provided with aligned apertures 50. Defined between the guide plate 48 and the die plate 44 is a slot 52, referred to hereinafter as the punching slot, into which a stack of documentary material such as paper may be placed, preparatory to an edge punching operation.

Details of the construction and operation of the device described thus far are conventional, and reference may be made for details omitted herefrom, to the specification of other of our patent applications, pending and granted, details of which may readily be obtained.

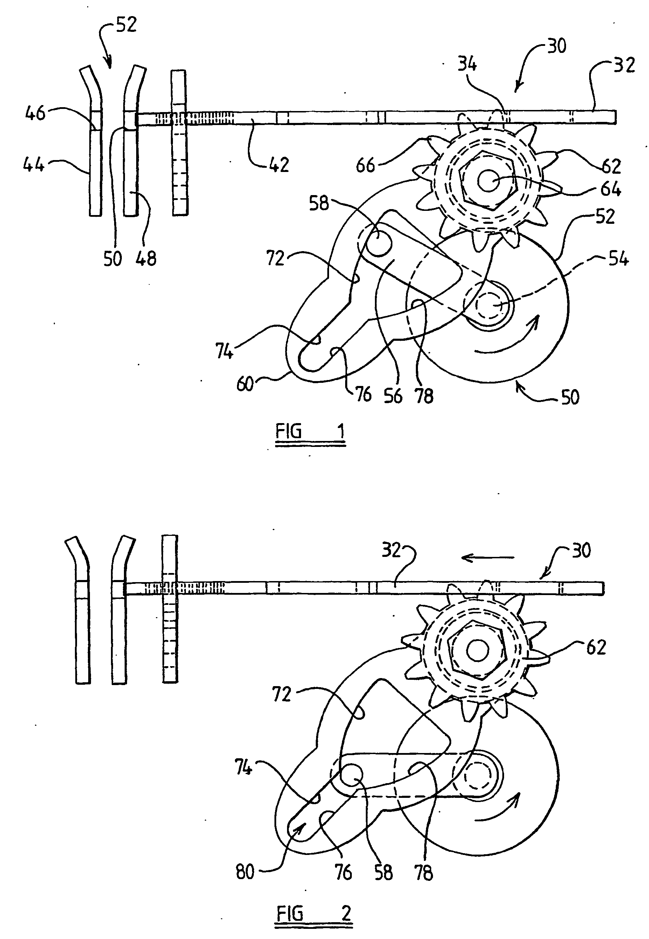

The punching device comprises drive means 50, comprising a rotary electric motor 52, comprising an output drive spindle 54 (shown in dotted lines in Figure 1) driven through gearing (not shown). Operative between the drive spindle 54 and the punch assembly 30 is transfer mechanism comprising a first transfer member 56 in the form of an arm provided with a transverse roller 58 thereon, a second transfer member 60 secured to a drive pinion 62, the drive pinion 62 and transfer member 60 being rotatable about a common axis 64, teeth 66 of the drive pinion being engageable with slots 34 in the punch plate 32, said slots also forming part of the transfer mechanism of the punching device.

The second transfer member 60 is provided with four drive faces 72, 74, 76 and 78, two of said drives faces 72 and 78 being passive, and two of said drive faces 74 and 76 being active. In particular, the drive face 72 defines an arc centered about the axis 55 of the drive spindle 54 when the punch plate 32 is in its retracted position (shown in Figure 1) whilst the drive face 78 defines an arc centered about the axis 55, when the punch plate 32 is in its advanced position, as shown in Figure 5. The drive faces 74 and 76 define a slot 80 within which the roller 58 may travel, said slot extending radially of the axis 64.

The sequence of operation of the drive means of the punch assembly will now be described with reference to Figures 1 to 5 of the drawings.

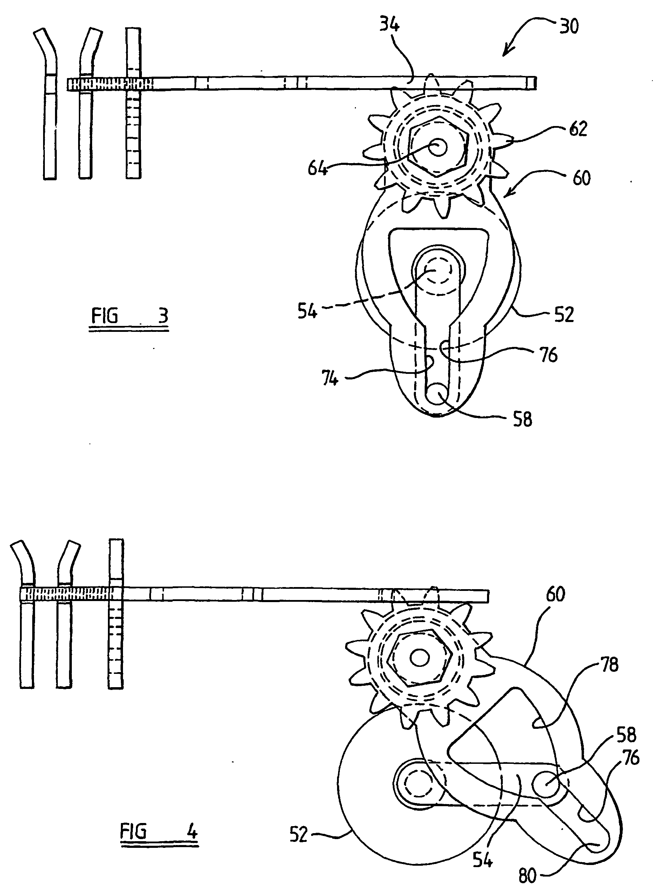

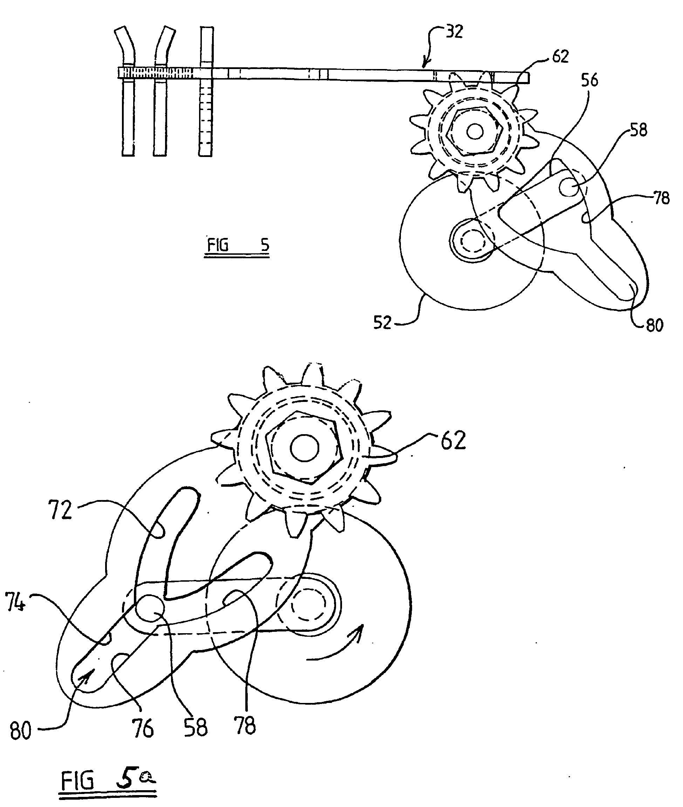

As has been said, Figure 1 illustrates the position of the integers with the punch plate 32 in its retracted position, ie. with the punches 42 having just been withdrawn from the apertures of the guide plate 48. A stack of paper or the like material is entered into the aperture 52, and a signal commencing operation of the device is initiated, such as the pressing of a start button (not shown). The motor is caused to operate, involving rotation of the spindle 54 in an anti-clockwise direction about the axis 55, as shown in the drawing, causing the roller 58 to move along the first drive face 72 without initially producing any significant rotative movement of the drive pinion 62, and thus producing no significant movement of the punch plate 32. When the drive roller 58 passes into the slot 80, as shown in Figure 2 of the drawings, the roller 58 engages the drive face 74 producing anti-clockwise rotation of the pinion 62, and movement of the punch plate from its retracted position towards its advanced position. Such movement continues whilst the drive roller 58 initially travels into, and then from the slot 80, the midpoint in the movement of the punch plate being shown in Figure 3, and the punch plate being shown in its advanced position in Figure 4, defined by engagement of the roller 58 at the junction of the drive face 76 and the drive face 78. At this point, or indeed shortly before if desired, a sensing member may be energised to cause termination of operation of the drive motor 52, run down of the motor being operative to produce movement of the roller 58 along the drive face 78 without any significant movement of the punch plate 32 from its advanced position.

Thus, the advanced position may be determined accurately, and indeed may if desired by determined as being that point in which all of the punches 42 have passed just beyond the apertures 46 of the die plate 44, as shown in Figures 4 and 5, without the need for any accommodation for the over-travel conventionally produced.

On completion of cessation of movement of the drive motor 52, a reverse signal is applied to the motor, causing the drive spindle 54 to rotate in a clockwise direction from the position shown in Figure 5, the drive roller 58 initially travelling along the drive face 78 without producing any significant rotational movement of the pinion 62, until the roller 58 enters the slot 80, at which point continued rotation of the drive spindle 54 produces clockwise rotation of the pinion 62, producing in turn retractive movement of the punch plate 32. Retraction of the punch plate 32 continues until the roller 58 leaves the slot 80, this position, shown in Figure 2, defining the retracted position of the punch plate 32, allowing said retracted position to be defined by the point of which the last of the punches 42 passes into the apertures 50 of the guide plate 48.

As with advancement of the punch plate, transfer of the roller 58 from the drive face 74 to the drive face 72 may cause activation of a sensing member which terminates operation of the drive motor 52, or indeed if desired such a termination may be effected momentarily prior to such transfer. In either event, over-run of the drive motor 52 causes movement of the roller 58 along the drive face 72 (see Figure 1) without producing any further significant movement of the punch plate itself.

It will be appreciated that the faces 72, 74, 76 and 78 have been referred to as drive faces purely for convenience, although in fact only engagement by the roller 58 with the faces 74 and 76 produces movement of the punch plate, the faces 72 and 78 being thus to an extent passive. Nonetheless, close proximity between the roller 58 and the faces 72 and 78 is effective to resist any undesired movement of the punch plate, either from its retracted towards its advanced position, or from its advanced towards its retracted position, as the case may be.

Alternatively, as is shown in Figure 5a, the faces 72 and 78 may be formed by a Y-shaped cam track, along which the roller 58 traverses during operation of the transfer means, thereby ensuring restraint to movement of the punch plate, when in one or other of its selected positions.

Whilst the drive roller 58 is said to engage the passive drive faces 72 and 78, in fact they may traverse the passive faces 72 and 78 without any actual contact being required, for the performance of the operation in accordance with this invention.

By the use of the invention above described, powerful motors may be utilised to drive the punch plate, enabling large stacks of documentary material to be punched simultaneously, without any problem caused by motor over-run.

The punching device which is the second embodiment of this invention is similar in general construction and operation to the device which is the first embodiment, and will be described hereinafter only insofar as it differs from said first embodiment.

In the second embodiment, a transfer member 130 is utilised, having curved drive faces 82, 84 engageable within a slot 90 provided in the punch plate 32. A motor 131 is utilised, which is operative to rotate the transfer member about an axis 132.

In addition to the two drive faces 82, 84, the transfer member 130 comprises a third drive face 86, which has a radius of curvature centred on the axis 132 of rotation of the transfer member 130.

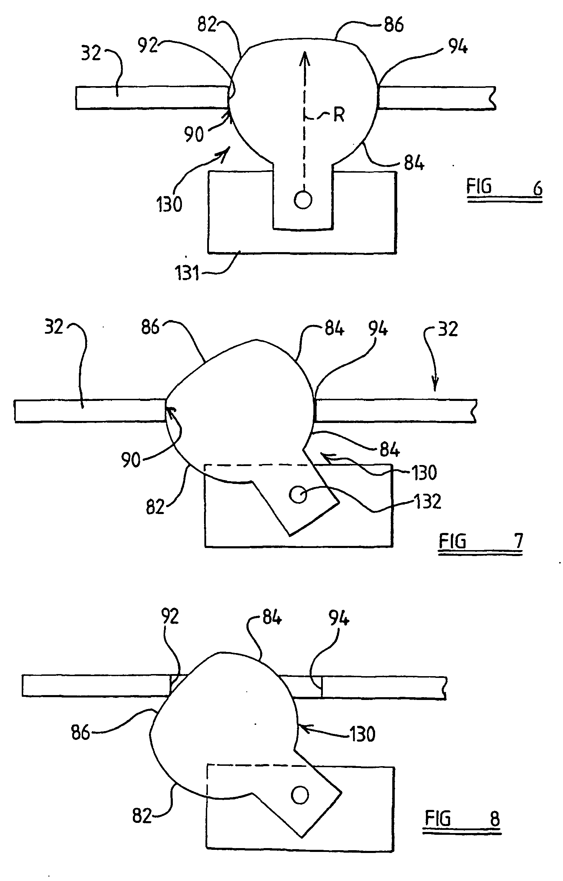

Thus, during movement of the punch plate 32 from its retracted to its advanced position (shown in the stage, Figure 6 to Figure 7) the leading edge 92 of the slot 90 is engaged by the first drive face 82. The fully advanced position of the punch plate is defined by the point at which the drive face 82 moves out of engagement with the slot 90, to be replaced by the third drive face 86, (Figure 7). Continued rotation of the transfer member 130 as may be caused by over-run of the motor 131, thus produces no significant further advancement of the punch plate 32.

It will be appreciated that during such final anti-clockwise rotation of the transfer member 130, the drive face 84 of the transfer member does in fact move away from the trailing edge 94 of the slot 90.

Thus on commencement of retractive movement of the punch plate 32, initially relative movement occurs between the drive face 84 and the trailing edge 94, whilst the drive face 84 approaches the trailing edge 94, further clockwise rotation of the transfer member 130 producing the desired retractive movement of the punch plate 32. Movement of the punch plate 32 into its fully retracted position, shown in Figure 9, is defined by the point at which the drive face 84 of the transfer member 130 moves out of engagement with the trailing edge of the slot 90, to be replaced by the third drive face 86, and as previously, continued rotation of the transfer member 130 produces no additional retractive movement of the punch plate 32.

By the use of the invention above described, a convenient solution is found to the problem of motor overrun, and simultaneously allows the punching machine to be built to a compact design format.

## Claims

1. A punching device comprising:
(a) a drive means (50, 131) operative in both a forward and a reverse direction; and
(b) a punch assembly (30, 32) mounted for rectilinear movement between retracted and advanced positions;
**characterised in that** the drive means (50, 131) and punch assembly (30, 32) are arranged such that operation of the drive means (50, 131) in the forward direction moves the punch assembly (30, 32) toward the retracted position, and operation of the drive means (50, 131) in the reverse direction moves the punch assembly (30, 32) towards the advanced position;
the punching device further comprising a punch overrun compensator, which includes a transfer mechanism (56, 60, 130) connected between the drive means (50, 131) and the punch assembly (30, 32), and which, in use, provides transmission of drive from the drive means (50, 131) to the punch assembly (30, 32) to move the punch assembly (30, 32) towards the retracted position or the advanced position, and causes no further movement of the punch assembly (30, 32) on reaching one of said positions in the event of overrun of the drive means (50, 131).

2. A punching device according to claim 1 **characterised in that** the transfer mechanism comprises a transfer member (130) having three faces (82, 84, 86) which are engaged directly or indirectly with the punch assembly (32), engagement of a first face (82) being operative to cause movement of the punch assembly (32) towards the advanced position, engagement of a second face (84) being operative to cause movement of the punch assembly (32) towards the retracted position, and engagement of a third face (86) being operative to cause no significant further movement of the punch assembly (32) on reaching the advanced position or the retracted position in the event of overrun of the drive means (131).

3. A punching device according to claim 2 **characterised in that** the first and second faces (82, 84) engage with a slot (90) provided in a punch plate (32) of the punch assembly, to cause movement of the punch assembly.

4. A punching device according to claim 2 or claim 3 **characterised in that** the third face (86) has a radius of curvature centred on an axis (132) of rotation of the transfer member (130), such that engagement of the third face (86) with the punch assembly causes no movement of the punch assembly.

5. A punching device according to claim 1 **characterised in that** the transfer mechanism comprises two transfer members, a first transfer member (56, 58) being operative to engage with a second transfer member (60) to cause the second transfer member (60) to move the punch assembly (30) towards the retracted position or the advanced position.

6. A punching device according to claim 5 **characterised in that** the second transfer member (60) comprises at least two faces (72, 74, 76, 78) and the first transfer member (56, 58) acts against the faces during operation of the drive means (50).

7. A punching device according to claim 6 **characterised in that** the second transfer member (60) comprises four faces (72, 74, 76, 78), and operation of the drive means (50) causes the first transfer member (56, 58) to act against a first face (74) to move the punch assembly (30) towards the advanced position, operation of the drive means (50) causes the first transfer member (56, 58) to act against a second face (76) to move the punch assembly (30) towards the retracted position, overrun of the drive means (50) causes the first transfer member (56, 58) to act against or traverse a third face (72) causing no further significant movement of the punch assembly (30) beyond the advanced position, and overrun of the drive means (50) causes the first transfer member (56, 58) to act against or traverse a fourth face (78) causing no further movement of the punch assembly (30) beyond the retracted position.

8. A punching device according to any of the claims 5 to 7 **characterised in that** the first transfer member (56, 58) is a drive member operative to engage with the second transfer member (60) to produce movement thereof.

9. A punching device according to claim 8, as dependent from claim 6 or claim 7, **characterised in that** the drive means (50) is operative to produce movement of the first transfer member (56, 58) along a predetermined path, such movement causing the first transfer member (56, 58) to act against the faces of the second transfer member (60).

10. A punching device according to any preceding claim **characterised in that** the drive means (50, 131) is operative to produce rotary movement.

## Patentansprüche

1. Stanzvorrichtung, umfassend:
(a) ein Antriebsmittel (50, 131), das sowohl in einer vorwärtsgerichteten als auch in einer umgekehrten Richtung wirkt; und
(b) eine Stanzanordnung (30, 32), die für eine geradlinige Bewegung zwischen einer zurückgezogenen und einer vorgezogenen Position gehalten ist;
**dadurch gekennzeichnet, daß** das Antriebsmittel (50, 131) und die Stanzanordnung (30, 32) so angeordnet sind, daß eine Betätigung des Antriebsmittels (50, 131) in der vorwärts gerichteten Richtung die Stanzanordnung (30, 32) in Richtung auf die zurückgezogene Position bewegt, und eine Betätigung des Antriebsmittels (50, 131) in der umgekehrten Richtung die Stanzanordnung (30, 32) in Richtung auf die vorgeschobene Position bewegt;
wobei die Stanzvorrichtung ferner mit einem Kompensator für übermäßiges Stanzen versehen ist, der einen Übertragungsmechanismus (56, 60, 130) aufweist, der zwischen dem Antriebsmittel (50, 131) und der Stanzanordnung (30, 32) angeschlossen ist, und der im Gebrauch für eine Übertragung von Antriebskraft von dem Antriebsmittel (50, 131) zu der Stanzanordnung (30, 32) sorgt, um die Stanzanordnung (30, 32) in Richtung auf die zurückgezogene Position oder die vorgeschobene Position zu bewegen, und zur Folge hat, daß keine weitere Bewegung der Stanzanordnung (30, 32) beim Erreichen von einer der genannten Positionen auftritt, in dem Fall einer übermäßigen Bewegung des Antriebsmittels (50, 131).

2. Stanzvorrichtung nach Anspruch 1, **dadurch gekennzeichnet, daß** der Übertragungsmechanismus ein Übertragungsteil (130) aufweist, welches mit drei Flächen (82, 84, 86) versehen ist, die direkt oder indirekt mit der Stanzanordnung (32) in Eingriff stehen, wobei ein Zusammenwirken mit einer ersten Fläche (82) so wirkt, daß eine Bewegung der Stanzanordnung (32) in Richtung auf die vorgeschobene Position hervorgerufen wird, ein Zusammenwirken mit einer zweiten Fläche (84) so wirkt, daß eine Bewegung der Stanzanordnung (32) in Richtung auf die zurückgezogene Position die Folge ist, und ein Zusammenwirken mit einer dritten Fläche (86) so wirkt, daß keine wesentliche weitere Bewegung der Stanzanordnung (32) die Folge ist, beim Erreichen der vorgeschobenen Position oder der zurückgezogenen Position, im Falle einer übermäßigen Bewegung des Antriebsmittels (131).

3. Stanzvorrichtung nach Anspruch 2, **dadurch gekennzeichnet, daß** die erste und zweite Fläche (82, 84) mit einem Schlitz (90) zusammenwirken, der in einer Stanzplatte (32) der Stanzanordnung vorgesehen ist, um eine Bewegung der Stanzanordnung hervorzurufen.

4. Stanzvorrichtung nach Anspruch 2 oder Anspruch 3, **dadurch gekennzeichnet, daß** die dritte Fläche (86) einen Krümmungsradius aufweist, der auf einer Achse (132) der Drehung des Übertragungsteils. (130) zentriert ist, so daß ein Zusammenwirken der dritten Fläche (86) mit der Stanzanordnung keine Bewegung der Stanzanordnung zur Folge hat.

5. Stanzvorrichtung nach Anspruch 1, **dadurch gekennzeichnet, daß** der Übertragungsmechanismus zwei Übertragungsteile aufweist, ein erstes Übertragungsteil (56, 58), welches so wirkt, daß es mit einem zweiten Übertragungsteil (60) zusammenwirkt, um das zweite Übertragungsteil (60) dazu zu veranlassen, die Stanzanordnung (30) in Richtung auf die zurückgezogene Position oder die vorgeschobene Position zu bewegen.

6. Stanzvorrichtung nach Anspruch 5, **dadurch gekennzeichnet, daß** das zweite Übertragungsteil (60) zumindest zwei Flächen (72, 74, 76, 78) aufweist, und daß das erste Übertragungsteil (56, 58) während eines Betriebs des Antriebsmittels (50) gegen die Flächen wirkt.

7. Stanzvorrichtung nach Anspruch 6, **dadurch gekennzeichnet, daß** das zweite Übertragungsteil (60) mit vier Flächen (72, 74, 76, 78) versehen ist, und daß eine Betätigung des Antriebsmittels (50) das erste Übertragungsteil (56, 58) dazu veranlaßt, gegen eine erste Fläche (74) zu wirken, um die Stanzanordnung (30) in Richtung auf die vorgeschobene Position zu bewegen, und daß eine Betätigung des Antriebsmittels (50) das erste Übertragungsteil (56, 58) dazu veranlaßt, gegen eine zweite Fläche (76) zu wirken, um die Stanzanordnung (30) in Richtung auf die zurückgezogene Position zu bewegen, wobei eine übermäßige Bewegung des Antriebsmittels (50) das erste Übertragungsteil (56, 58) dazu veranlaßt, gegen eine dritte Fläche (72) zu wirken oder sich über diese hinwegzubewegen, wobei keine weitere wesentliche Bewegung der Stanzanordnung (30) über die vorgeschobene Position hinaus veranlaßt wird, und wobei eine übermäßige Bewegung des Antriebsmittels (50) das erste Übertragungsteil (56, 58) dazu veranlaßt, gegen eine vierte Fläche (78) zu wirken oder über diese hinwegzugehen, wobei keine weitere Bewegung der Stanzanordnung (30) über die zurückgezogene Position hinaus die Folge ist.

8. Stanzanordnung nach einem der Ansprüche 5 bis 7, **dadurch gekennzeichnet, daß** das erste Übertragungsteil (56, 58) ein Antriebsteil ist, welches so wirkt, daß es mit dem zweiten Übertragungsteil (60) zusammenwirkt, um eine Bewegung davon hervorzurufen.

9. Stanzvorrichtung nach Anspruch 8, soweit auf Anspruch 6 oder Anspruch 7 zurückbezogen, **dadurch gekennzeichnet, daß** das Antriebsmittel (50) so wirkt, um eine Bewegung des ersten Übertragungsteils (56, 58) entlang eines vorbestimmten Weges hervorzurufen, wobei eine solche Bewegung das erste Übertragungsteil (56, 58) dazu veranlaßt, gegen die Flächen des zweiten Übertragungsteils (60) zu wirken.

10. Stanzvorrichtung nach einem der vorangehenden Ansprüche, **dadurch gekennzeichnet, daß** das Antriebsmittel (50, 131) so wirkt, daß es eine drehende Bewegung erzeugt.

## Revendications

1. Dispositif de découpage comprenant :
des moyens d'entraînement (50, 131) qui sont opérants à la fois dans une direction vers l'avant et dans une direction vers l'arrière ; et
un ensemble de découpage (30, 32) monté pour un mouvement rectiligne entre des positions rétractée et avancée ;
**caractérisé en ce que** les moyens d'entraînement (50, 131) et l'ensemble de découpage (30, 32) sont agencés de telle manière que le fonctionnement des moyens d'entraînement (50, 131) dans la direction vers l'avant déplace l'ensemble de découpage (30, 32) vers la position rétractée, et que le fonctionnement des moyens d'entraînement (50, 131) dans la direction vers l'arrière déplace l'ensemble de découpage (30, 32) vers la position avancée ;
le dispositif de découpage comprenant en outre un compensateur de dépassement de découpage, qui comprend un mécanisme de transfert (56, 60, 130) raccordé entre les moyens d'entraînement (50, 131) et l'ensemble de découpage (30, 32), et qui, à l'utilisation, transmet une puissance d'entraînement depuis les moyens d'entraînement (50, 131) vers l'ensemble de découpage (30, 32) pour déplacer l'ensemble de découpage (30, 32) vers la position rétractée ou la position avancée, et ne cause aucun mouvement supplémentaire de l'ensemble de découpage (30, 32) une fois qu'il a atteint l'une desdites positions dans le cas d'un dépassement des moyens d'entraînement (50,131).

2. Dispositif de découpage selon la revendication 1 **caractérisé en ce que** le mécanisme de transfert comprend un élément de transfert (130) présentant trois faces (82, 84, 86) qui s'engagent directement ou indirectement avec l'ensemble de découpage (32), l'engagement d'une première face (82) étant opérant pour provoquer le mouvement de l'ensemble de découpage (32) vers la position avancée, l'engagement d'une deuxième face (84) étant opérant pour provoquer le mouvement de l'ensemble de découpage (32) vers la position rétractée ; et l'engagement d'une troisième face (86) étant opérant pour ne provoquer aucun mouvement supplémentaire, significatif de l'ensemble de découpage (32) une fois qu'il a atteint la position avancée ou la position rétractée dans le cas d'un dépassement des moyens d'entraînement (131).

3. Dispositif de découpage selon la revendication 2 **caractérisé en ce que** les première et deuxième faces (82, 84) s'engagent dans une fente (90) prévue dans une plaque de découpage (32) de l'ensemble de découpage, pour provoquer le mouvement de l'ensemble de découpage.

4. Dispositif de découpage selon la revendication 2 ou 3 **caractérisé en ce que** la troisième face (86) a un rayon de courbure centré sur un axe (132) de rotation de l'élément de transfert (130), de sorte que l'engagement de la troisième face (86) avec l'ensemble de découpage ne provoque pas de mouvement de l'ensemble de découpage.

5. Dispositif de découpage selon la revendication 1 **caractérisé en ce que** le mécanisme de transfert comprend deux éléments de transfert, un premier élément de transfert (56, 58) étant opérant pour se mettre en prise avec un deuxième élément de transfert (60) pour amener le deuxième élément de transfert (60) à déplacer l'ensemble de découpage (30) vers la position rétractée ou la position avancée.

6. Dispositif de découpage selon la revendication 5 **caractérisé en ce que** le deuxième élément de transfert (60) comprend au moins deux faces (72, 74, 76, 78) et le premier élément de transfert (56, 58) agit contre les faces lorsque les moyens d'entraînement (50) fonctionnent.

7. Dispositif de découpage selon la revendication 6 **caractérisé en ce que** le deuxième élément de transfert (60) comprend quatre faces (72, 74; 76, 78), et le fonctionnement des moyens d'entraînement (50) amène le premier élément de transfert (56, 58) à agir contre une première face (74) pour déplacer l'ensemble de découpage (30) vers la position avancée, le fonctionnement des moyens d'entraînement (50) amène le premier élément de transfert (56, 58) à agir contre une deuxième face (76) pour déplacer l'ensemble de découpage (30) vers la position rétractée, le dépassement des moyens d'entraînement (50) amène le premier élément de transfert (56, 58) à agir contre ou à traverser une troisième face (72) sans provoquer de mouvement supplémentaire significatif de l'ensemble de découpage (30) au-delà de la position avancée, et le dépassement des moyens d'entraînement (50) amène le premier élément de transfert (56, 58) à agir contre ou à traverser une quatrième face (78) sans provoquer de mouvement supplémentaire de l'ensemble de découpage (30) au-delà de la position rétractée.

8. Dispositif de découpage selon l'une quelconque des revendications 5 à 7 **caractérisé en ce que** le premier élément de transfert (56, 58) est un élément d'entraînement opérant pour se mettre en prise avec le deuxième élément de transfert (60) pour produire un mouvement de celui-ci.

9. Dispositif de découpage selon la revendication 8, qui dépend de la revendication 6 ou 7, **caractérisé en ce que** les moyens d'entraînement (50) sont opérants pour produire un mouvement du premier élément de transfert (56, 58) le long d'un trajet prédéterminé, ce mouvement amenant le premier élément de transfert (56, 58) à agir contre les faces du deuxième élément de transfert (60).

10. Dispositif de découpage selon l'une quelconque des revendications précédentes **caractérisé en ce que** les moyens d'entraînement (50, 131) sont opérants pour produire un mouvement rotatif.
